# EUROPÄISCHE PATENTANMELDUNG

(11) **EP 4 438 411 A1**
(43) Veröffentlichungstag der Anmeldung: **02.10.2024**
(21) Anmeldenummer: 24161823.0
(22) Anmeldetag: 06.03.2024
(51) Int. Cl.: B60Q 1/48, B60Q 1/14

(54) **AUTOMATISCHE AKTIVIERUNG/DEAKTIVIERUNG VON PARKLICHT AUF BASIS VON SENSORINFORMATIONEN**

(30) Priorität: 29.03.2023 DE 102023202875
(71) Anmelder: VOLKSWAGEN AG, 38440 Wolfsburg (DE)
(72) Erfinder: Münning, Daniel, 38124 Braunschweig (DE); Detering, Stefan, 38120 Braunschweig (DE)

(57) **Zusammenfassung**

Verfahren zur automatischen Aktivierung und Deaktivierung einer situationsabhängigen Beleuchtung eines abgestellten Ego-Fahrzeugs (F_{ego}), wobei in einem ersten Verfahrensschritt (I) mittels Sensorik ein Abstellort des Ego-Fahrzeugs (F_{ego}) festgestellt und an eine Steuerungseinrichtung (10) weitergeleitet wird, in einem zweiten Verfahrensschritt (II) mittels Sensorik eine aktuelle Situation am Abstellort festgestellt und an die Steuerungseinrichtung (10) weitergeleitet wird, in einem dritten Verfahrensschritt (III) von einem Rechner (20) der Steuerungseinrichtung (10) der im ersten Verfahrensschritt (I) festgestellte Abstellort und die im zweiten Verfahrensschritt (II) festgestellte Situation am Abstellort zu einem aktuellen Gesamtbild (E_{ges}) zusammengefügt werden, in einem vierten Verfahrensschritt (IV) aus dem aktuellen Gesamtbild (E_{ges}) mittels der Steuerungseinrichtung (10) notwenige Maßnahmen zur automatischen zumindest teilweisen Aktivierung oder Deaktivierung der Fahrzeugbeleuchtung des abgestellten Fahrzeugs ermittelt und in einem fünften Verfahrensschritt (V) durch die Steuerungseinrichtung (10) veranlasst werden, wobei das Gesamtbild (E_{ges}) mittels der Sensorik kontinuierlich oder in Abständen überprüft oder überwacht wird.

## Beschreibung

Die Erfindung betrifft ein Verfahren zur automatischen Aktivierung und Deaktivierung einer situationsabhängigen Beleuchtung eines abgestellten Fahrzeugs, wobei in einem ersten Verfahrensschritt mittels Sensorik ein Abstellort des Fahrzeugs festgestellt und an eine Steuerungseinrichtung weitergeleitet wird, in einem zweiten Verfahrensschritt mittels Sensorik eine aktuelle Situation am Abstellort festgestellt und an die Steuerungseinrichtung weitergeleitet wird, in einem dritten Verfahrensschritt von einem Rechner der Steuerungseinrichtung der im ersten Verfahrensschritt festgestellte Abstellort und die im zweiten Verfahrensschritt festgestellte Situation am Abstellort zu einem aktuellen Gesamtbild zusammengefügt werden, in einem vierten Verfahrensschritt aus dem aktuellen Gesamtbild mittels der Steuerungseinrichtung notwenige Maßnahmen zur automatischen zumindest teilweisen Aktivierung oder Deaktivierung der Fahrzeugbeleuchtung des abgestellten Fahrzeugs ermittelt und in einem fünften Verfahrensschritt durch die Steuerungseinrichtung veranlasst werden, wobei das Gesamtbild mittels der Sensorik kontinuierlich oder in Abständen überprüft oder überwacht wird.

Wann und wo ein Parklicht an einem Fahrzeug eingeschaltet werden muss, ist in der Straßenverkehrsordnung geregelt. In der Regel muss der Fahrer des Fahrzeugs das Parklicht, bzw. außerorts das Standlicht, aktiv einschalten, wenn er das Fahrzeug beispielsweise an einem Straßenrand oder in einer neben der Straße liegenden Parkbucht abstellt. Das heißt, wird das Fahrzeug tagsüber abgestellt und bleibt über Nacht stehen, muss das Parklicht nach dem Abstellen eingeschaltet werden, egal ob dies zu diesem Zeitpunkt sinnvoll ist. Oft wird das Einschalten des Parklichts beim Abstellen eines Fahrzeugs vergessen. In diesem Fall steht das Fahrzeug über Nacht ohne Parkbeleuchtung, was gegen die aktuelle Straßenverkehrsordnung verstößt und von der Polizei geahndet werden kann. Ein unnötiger Betrieb der Parkbeleuchtung über einen längeren Zeitraum belastet die Batterie, was insbesondere bei Fahrzeugen mit kleinen Batterien nachteilig ist.

Aus der DE 10 2013 206 208 A1 ist ein Fahrzeug mit einem automatischen Parklicht bekannt, mit einer Steuereinheit, die hergerichtet ist, anhand von Positionsdaten oder Umgebungsdaten des Fahrzeugs ein Indiz dafür zu ermitteln, dass das Fahrzeug am Rand einer Straße abgestellt ist. Die Steuereinheit kann auf Basis des Indizes veranlassen, dass ein Parklicht des Fahrzeugs eingeschaltet wird.

Die DE 10 2006 027570 A1 betrifft ein Fahrzeug mit einer Ruhebeleuchtungsanlage, die über ein Signal wenigstens eines Sensors aktiviert oder deaktiviert wird.

Aus der DE 10 2007 039 470 A1 ist ein Verfahren zur Steuerung einer Fahrzeugbeleuchtung bekannt, bei dem eine Lichtmenge der Außenbeleuchtung in Abhängigkeit von Umgebungsinformationen gesteuert wird.

Aus der DE 296 07 987 U1 ist eine Einschaltautomatik des Stand- oder Parklichts bei einem im Dunkeln abgestellten Fahrzeug bekannt, die durch das Scheinwerferlicht eines fremden Fahrzeugs aktiviert wird.

Es besteht daher Bedarf an einer Lösung, mit der die Entladung der Batterie durch die Parkbeleuchtung des Fahrzeugs möglichst gering belastet wird.

Diese Aufgabe wird durch das Verfahren gemäß dem Anspruch 1 gelöst. Die von Anspruch 1 abhängigen Ansprüche sind geeignet, das Verfahren vorteilhaft weiterzubilden.

Die Erfindung betrifft ein Verfahren zur automatischen Aktivierung und Deaktivierung einer situationsabhängigen Beleuchtung eines abgestellten Ego-Fahrzeugs. Als Ego-Fahrzeug wird im Rahmen dieser Anmeldung das abgestellte Fahrzeug bezeichnet, das hergerichtet ist, das beschriebene Verfahren durchzuführen.

In einem ersten Verfahrensschritt wird mittels Sensorik ein Abstellort des Ego-Fahrzeugs festgestellt und an eine Steuerungseinrichtung weitergeleitet.

In einem zweiten Verfahrensschritt wird mittels Sensorik eine aktuelle Situation am Abstellort festgestellt und an die Steuerungseinrichtung weitergeleitet.

In einem dritten Verfahrensschritt wird von einem Rechner der Steuerungseinrichtung der im ersten Verfahrensschritt festgestellte Abstellort und die im zweiten Verfahrensschritt festgestellte Situation am Abstellort zu einem aktuellen Gesamtbild zusammengefügt.

In einem vierten Verfahrensschritt werden aus dem aktuellen Gesamtbild mittels der Steuerungseinrichtung notwenige Maßnahmen zur automatischen zumindest teilweisen Aktivierung oder Deaktivierung der Fahrzeugbeleuchtung des abgestellten Ego-Fahrzeugs ermittelt.

In einem fünften Verfahrensschritt werden durch die Steuerungseinrichtung die notwenigen Maßnahmen veranlasst. Das heißt, es werden durch die Steuerungseinrichtung nur die Maßnahmen veranlasst, die aufgrund der aktuellen Gesamtsituation nötig sind.

Das Gesamtbild wird mittels der Sensorik kontinuierlich oder in Abständen überprüft oder überwacht.

Im ersten Verfahrensschritt wird anhand von mittels Sensorik ermittelten Daten durch die Steuerungseinrichtung ein Abstellort des Ego-Fahrzeugs ermittelt. Bei der Sensorik kann es sich zum Beispiel um einen GPS-Sensor zusammen mit einer digitalen Karte/Informationen von einem Navigationssystem und/oder eine Fahrzeugkamera und/oder einen Abstandssensor handeln. Insbesondere wird im ersten Verfahrensschritt festgestellt, ob das Ego-Fahrzeug innerhalb einer geschlossenen Ortschaft, beispielsweise auf der Fahrbahn am Straßenrand, in einer Parkbucht, auf einem Parkplatz, in einer Auffahrt oder in einer Garage, oder außerhalb einer geschlossenen Ortschaft, beispielsweise am Straßenrand einer Landstraße oder auf einem Feldweg abgestellt ist.

Im zweiten Verfahrensschritt wird anhand von Sensorik die aktuelle Ortszeit und/oder die aktuelle Helligkeit am Abstellort festgestellt. Das heißt, es wird festgestellt, ob es Tag, Dämmerung oder Nacht ist, ob die Lichtverhältnisse gut oder zum Beispiel aufgrund von Regen oder Schneefall diffus oder schlecht sind. Des Weiteren kann im zweiten Verfahrensschritt mittels Sensorik überprüft werden, ob vor, neben oder hinter dem Ego-Fahrzeug ein weiteres Fahrzeug abgestellt ist und/oder ob eine Seite des Ego-Fahrzeugs einer befahrenen Straße zugewandt ist.

Im dritten Verfahrensschritt wird anhand der im ersten und zweiten Verfahrensschritt gewonnenen Erkenntnisse festgestellt, ob das Ego-Fahrzeug an einer Position abgestellt ist, die es erfordert, dass das Ego-Fahrzeug gemäß der geltendem Straßenverkehrsordnung aus Sicherheitsgründen beleuchtet werden muss, und/oder ob andere Fahrzeuge am Ego-Fahrzeug in einem Abstand vorbeifahren, der kleiner oder gleich einem vorgegebenen Mindestabstand ist. Als Mindestabstand kann beispielsweise eine Abstand von weniger als 2 m vorgegeben sein, bevorzugt kann der vorgegebene Mindestabstand 1,5 m oder weniger betragen.

Die in den Verfahrensschritten 1 bis 3 zusammengeführten Ergebnisse ergeben das aktuelle Gesamtbild der Situation des abgestellten Ego-Fahrzeugs. Ergibt das Gesamtbild beispielsweise, dass das Ego-Fahrzeug außerhalb einer geschlossenen Ortschaft an einer befahrenen oder befahrbaren Straße abgestellt ist und die Helligkeit der Umgebung unterhalb eines vorgegebenen Grenzwerts liegt, kann durch die Steuerungseinrichtung im vierten Verfahrensschritt automatisch das Abblendlicht des Ego-Fahrzeugs eingeschaltet werden. Dadurch ist das Ego-Fahrzeug für andere Verkehrsteilnehmer von weitem sichtbar, die Gefahr eines Unfalls ist dadurch reduziert.

Dass das Ego-Fahrzeug auf einer befahrenen Straße auf einer der Fahrspuren abgestellt ist, kann mit Hilfe von Schwarmdaten, durch Informationen des Navigationssystems oder mittels der Sensorik festgestellt werden. So kann die Sensorik erkennen, dass während der Fahrt ein konstanter Abstand zu einer Linie, beispielsweise der Verkehrstrennlinie oder Mittellinie der Straße, eingehalten wird, und im Wesentlichen der gleiche Abstand zu der Linie besteht, nachdem das Ego-Fahrzeug gestoppt wurde.

Wenn festgestellt wird, dass das Ego-Fahrzeug innerhalb einer geschlossenen Ortschaft, zum Beispiel am Straßenrand auf der Fahrbahn an einer befahrenen Straße abgestellt ist und andere Fahrzeuge an dem abgestellten Ego-Fahrzeug mit einem Abstand, der geringer als ein vorgegebener Mindestabstand ist, vorbeifahren und die Helligkeit unterhalb eines vorgegebenen Grenzwerts liegt, kann im vierten Verfahrensschritt durch die Steuerungseinrichtung das vordere und/oder das hintere Parklicht auf einer der Straße zugewandten Seite des Ego-Fahrzeugs durch die Steuerung automatisch eingeschaltet werden. Bevorzugt werden immer das vordere und das hintere Parklicht eingeschaltet. Zur Bestimmung der Seite des Ego-Fahrzeugs, an der das Parklicht aktiviert wird, kann mittels der Kamera auch der Bordstein erkannt werden.

Das Gesamtbild wird mittels der Sensorik kontinuierlich oder in regelmäßigen Abständen überprüft. Bei einer von der Sensorik entdeckten Änderung zum Beispiel der Helligkeit oder der Abstellsituation anderer Fahrzeuge in der unmittelbaren Umgebung des Ego-Fahrzeugs kann sodann die Beleuchtung des Ego-Fahrzeugs automatisch angepasst werden. Ein zeitlicher Abstand zwischen zwei aufeinanderfolgenden Überprüfungen des Gesamtbilds kann in Abhängigkeit von dem Datum und der Uhrzeit durchgeführt werden. Das heißt beispielsweise, dass der zeitliche Abstand aufeinanderfolgender Überprüfungen der Gesamtsituation nach dem Sonnenaufgang und bei gutem Wetter größer ist als der zeitliche Abstand nach dem Sonnenuntergang und/oder bei schlechtem Wetter.

So kann der Zeitabstand zwischen zwei Überprüfungen des Gesamtbilds am Tag beispielsweise 2 Stunden betragen, nach dem Sonnenuntergang kann der Zeitabstand 1 Stunde, bevorzugt 30 Minuten, bevorzugter 15 Minuten betragen. Optional kann auf eine regelmäßige Überprüfung während des Tages verzichtet werden, wenn für den Abstellort der Zeitpunkt des Sonnenunterganges bekannt ist. Die Überprüfung in kürzeren Zeitintervallen beginnt dann mit Sonnenuntergang, bevorzugt 30 Minuten, sehr bevorzugt 1 Stunde vor Sonnenuntergang. Die Sensorik überwacht das Gesamtbild kontinuierlich, beispielsweise bei einem Ego-Fahrzeug mit batteriebetriebenem Antrieb, solange dies an eine Ladestation angeschlossen ist. Schließlich kann die Steuerungseinrichtung den Zeitabstand zwischen zwei Überprüfungen abhängig vom Ladezustand der Batterie regulieren, das heißt, verlängern oder verkürzen. Dies kann für Fahrzeuge mit Verbrenner-Motor, Hybrid-Antrieb und Fahrzeuge mit rein elektrischem Antrieb gleichermaßen gelten.

Die Steuerungseinrichtung kann eine Empfangseinheit zum Empfangen der Daten der Sensorik umfassen und wenigstens einen Speicher, in dem Daten wie der Mindestabstand zu vorbeifahrenden Fahrzeugen, ein Grenzwert für die Umgebungshelligkeit, ein Mindestabstand zu vor bzw. hinter dem Ego-Fahrzeug parkenden Fahrzeugen und optional andere Daten hinterlegt sind. Des Weiteren kann die Steuerungseinrichtung wenigstens einen Rechner mit einem Programm umfassen, auf dem ein Programm läuft, mit dem die von der Sensorik erfassten Daten und weitere Daten, wie beispielsweise die Uhrzeit, das Datum, der Wetterbericht zusammengeführt, ausgewertet, gewichtet und verarbeitet werden. Das Ergebnis kann in Schaltsignale umgewandelt und über eine Sendeeinheit der Steuerungseinrichtung die Parkbeleuchtung des Ego-Fahrzeugs situationsbedingt aktivieren oder deaktivieren.

In einer Ausführung kann die oder eine Steuerungseinrichtung ständig oder in regelmäßigen Abständen mit der Infrastruktur der Umgebung kommunizieren, und das Licht kann selektiv durch die Infrastruktur aktiviert werden.

Die Sensorik kann wenigstens einen Sensor aus der Gruppe von Kamera, sowohl Frontkamera als auch Top View oder Surround View Kameras, Frontradar, Heckradar, Ultraschallsensor, Lidar, GPS, Lichtsensor, Abstandsmesser und Abstandsradar zur Erfassung eines seitlichen Abstands des Ego-Fahrzeugs zu einer Bordsteinkante oder dem fließenden Verkehr umfassen.

Bevorzugt umfasst die Sensorik mehrere Sensoren, die gemeinsam mit den anderen Hilfen wie Uhr und/oder Wetterbericht dazu beitragen, das Gesamtbild der Abstellsituation des Ego-Fahrzeugs zu erstellen.

Ergibt das Gesamtbild beispielsweise, dass vor und hinter dem Ego-Fahrzeug ein weiteres Fahrzeug abgestellt ist, kann die Steuereinheit das Parklicht des Ego-Fahrzeugs zunächst nicht aktivieren. Optional kann zusätzlich bewertet werden, ob das vordere oder hintere Fahrzeug selber sein Parklicht aktiviert hat. Ein vorgegebener Mindestabstand zu dem vor bzw. hinter dem Ego-Fahrzeug geparkten sollte in diesem Fall weniger als 6 m, bevorzugt weniger als 5 m betragen. Dagegen kann die Steuerungseinrichtung das Parklicht des Ego-Fahrzeugs aktivieren, wenn die Sensorik feststellt, dass der Abstand zu einem der vor bzw. hinter dem Ego-Fahrzeug geparkten Fahrzeuge größer ist als der vorgegebene Mindestabstand und/oder eines oder beide der vor bzw. hinter dem Ego-Fahrzeug parkenden Fahrzeuge kein Parklicht eingeschaltet hat.

Ist das Ego-Fahrzeug unter einer Straßenlaterne abgestellt, kann die Sensorik anhand der Kennzeichnung der Straßenlaterne feststellen, ob diese im Laufe der Nacht abgeschaltet wird. Die Steuerungseinrichtung kann dann eine entsprechende Überprüfung der Gesamtsituation zu dem Zeitpunkt einplanen, zu dem im Regelfall die Straßenbeleuchtung abgeschaltet wird.

Bei dem Ego-Fahrzeug kann es sich um ein Fahrzeug handeln, das durch einen Verbrenner Motor, einen Hybrid-Motor oder einen E-Motor angetrieben wird. Bevorzugt wird das Gesamtbild nur dann kontinuierlich überwacht, wenn das Ego-Fahrzeug einen E-Antrieb hat und mit einer Ladestation zum Laden der Batterie des E-Antriebs verbunden ist.

In Folgenden wird das Verfahren anhand von drei Figuren näher erläutert. Die Figuren zeigen:
- Figur 1:: eine skizzenhafte Darstellung des Verfahrens;
- Figur 2:: eine Steuerungseinrichtung mit skizzierten Informationsflüssen;
- Figur 3:: eine Skizze einer Anwendungssituation für das Verfahren.

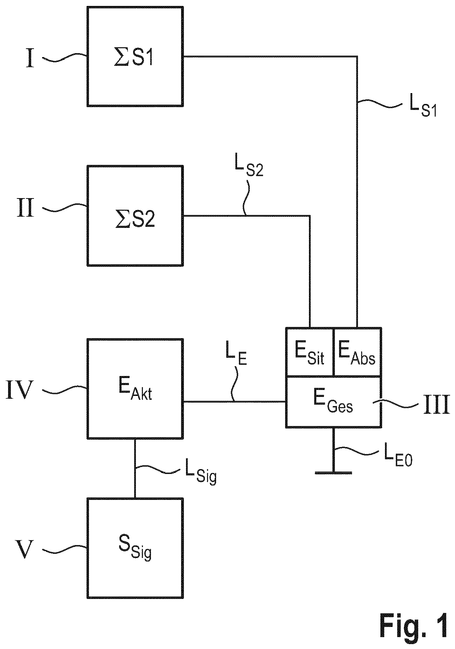

Die Figur 1 zeigt eine Skizze einer Ausführung des Verfahrens, mit dem ein Parklicht eines Fahrzeugs aufgrund von Sensorinformationen automatisch aktiviert und deaktiviert werden kann. Das Verfahren soll garantieren, dass das Fahrzeug bei Umgebungsbedingungen, wie beispielsweise Dunkelheit, durch Aktivierung des Parklichts vorschriftsmäßig abgestellt ist.

Gleichzeitig ermöglicht das Verfahren eine automatische Deaktivierung des Parklichts, wenn sich die Umgebungsbedingungen ändern, zum Beispiel nach Sonnenaufgang.

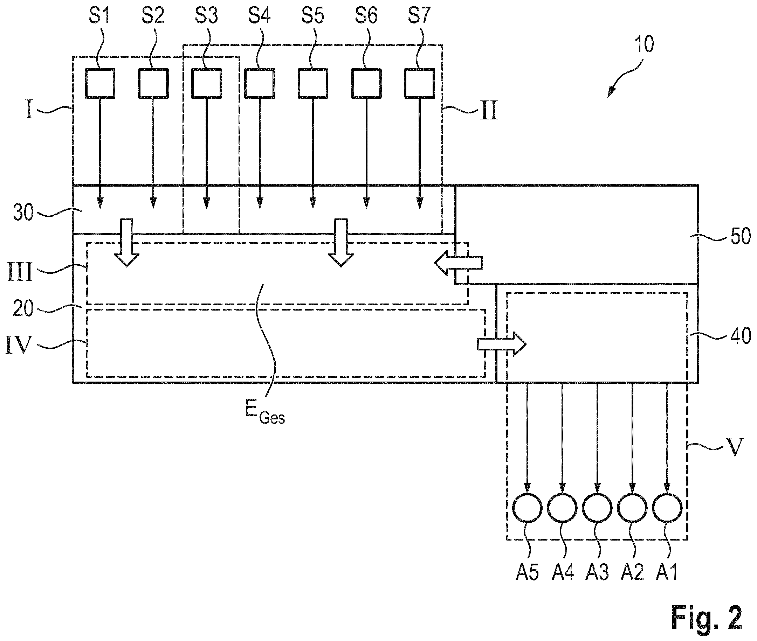

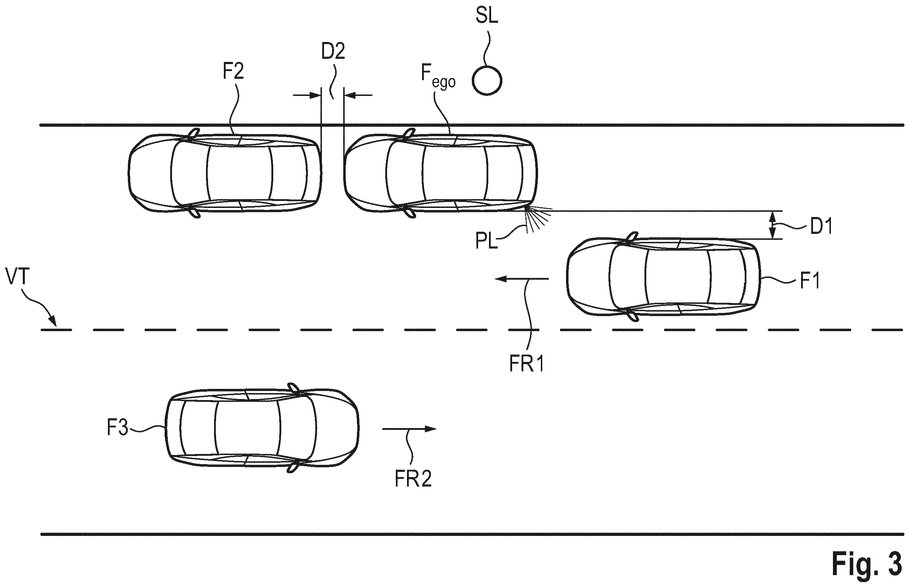

In einem ersten Verfahrensschritt I detektiert eine Sensorik, die aus einer ersten Menge von Sensoren ΣS1 bestehen kann, wobei die Menge wenigstens einen Sensor S1, S2, S3, S4, S5, S6, S7 (Figur 2) umfasst, einen Abstellort des Fahrzeugs oder Ego-Fahrzeugs F_{ego} (Figur 3). Die den Abstellort definierenden Daten werden über eine erste Leitung L_{S1} an eine Steuerungseinrichtung 10 (Figur 2) gesendet.

In einem zweiten Verfahrensschritt II detektiert eine Sensorik, die aus einer zweiten Menge von Sensoren ΣS2 bestehen kann, wobei die Menge wenigstens einen Sensor S1, S2, S3, S4, S5, S6 S7 umfasst, eine Abstellsituation E_{Sit}, beispielsweise in der Umgebung abgestellte weitere Fahrzeuge F1, F2, F3 (Figur 3), eine Lichtsituation und/oder die Verkehrsumgebung. Die zur Abstellsituation am Abstellort erfassten Daten werden über eine zweite Leitung L_{S2} an die Steuerungseinrichtung 10 weitergeleitet.

Zwischen der ersten Menge der Sensoren ΣS1 und der zweiten Menge der Sensoren ΣS2 kann es Überschneidungen geben. Das heißt, dass einzelne oder mehrere der Sensoren sowohl von der ersten Summe der Sensoren ΣS1 als auch von der zweiten Summe der Sensoren ΣS2 umfasst sind. Die erste Summe der Sensoren ΣS1 kann identisch der zweiten Summe von Sensoren ΣS2 sein.

In einem dritten Verfahrensschritt III werden die erfassten Daten des Abstellorts und der Abstellsituation am Abstellort zusammengeführt und gewichtet, so dass sich aus den Ergebnissen der für den Abstellort erfassten Daten E_{Abs} und der für die Abstellsituation am Abstellort erfassten Daten E_{Sit} ein Gesamtbild E_{ges} ergibt.

Das Verfahren kann hier enden L_{E0}, wenn die Betrachtung des Gesamtbilds E_{ges} ergibt, dass das Parklicht weder aktiviert noch deaktiviert werden muss. Ergibt sich dagegen die Notwendigkeit, das Parklicht automatisch zu aktivieren oder zu deaktivieren, werden die Daten des Gesamtbilds E_{ges} über eine Ergebnisleitung L_{E} weitergeleitet und in einem vierten Verfahrensschritt IV ausgewertet. Die Auswertung führt zu einem Aktivierungsergebnis E_{Akt}.

Die Ergebnisse der Auswertung im Verfahrensschritt IV werden in einem fünften Verfahrensschritt V über eine Signalleitung L_{Sig} zu Aktoren A1, A2, A3, A4, A5 (Figur 2) weitergeleitet und in Schaltsignale S_{sig} für die Aktoren A1, A2, A3, A4, A5 umgewandelt. Die Aktoren A1, A2, A3, A4, A5 aktivieren oder deaktivieren sodann das oder die Parklichter PL (Figur 3).

Das Verfahren mit den Verfahrensschritten I bis V wird getaktet beliebig oft oder kontinuierlich durchgeführt. Das heißt, dass zum Beispiel bei einem Ego-Fahrzeug F_{ego} mit rein elektrischem Antrieb, das mit einer Ladestation verbunden ist, das Verfahren kontinuierlich abläuft, also der Abstellort und insbesondere die Abstellsituation am Abstellort fortlaufend überprüft wird. Dabei kann das Verfahren den Abstellort als gegeben annehmen, solange das Ego-Fahrzeug nicht bewegt wird. Die Sensorik kann sich vollständig auf die Überwachung der Abstellsituation am Abstellort konzentrieren, beispielsweise auf Änderung der Helligkeit, Änderung der Situation in der Umgebung des Ego-Fahrzeugs, wie beispielsweise das Ein- und/oder Ausparken weiterer Fahrzeuge unmittelbar vor oder hinter dem Ego-Fahrzeug F_{ego}.

Die Figur 2 zeigt skizzenhaft das Verfahren anhand der Hardware, die zur Durchführung bzw. Anwendung des Verfahrens notwendig ist.

Im Zentrum steht die Steuerungseinrichtung 10, die zumindest eine Empfangseinheit 30, einen Rechner 20, einen Speicher 50 und eine Sendeeinheit 40 umfasst.

Im ersten Verfahrensschritt I wird von den Sensoren S1, S2, S3 ein Abstellort des Ego-Fahrzeugs F_{ego} (Figur 3) bestimmt. Bei den Sensoren S1, S2, S3 kann es sich beispielsweise um ein GPS, eine Fahrzeugkamera und ein Navigationssystem, mit dem eine spurgenaue Lokalisierung möglich ist, handeln. Die Sensoren S1, S2, S3 bilden die erste Summe von Sensoren ΣS1 (Figur 1). Im ersten Verfahrensschritt I wird bevorzugt festgestellt, ob das Ego-Fahrzeug F_{ego} innerhalb einer Ortschaft, auf der Fahrbahn am Straßenrand, in einer Garage, einer Auffahrt, auf einem Parkplatz oder außerhalb einer Ortschaft, zum Beispiel am Straßenrand einer befahrenen Straße, abgestellt ist. Als Parkplatz wird eine von der Straße getrennte Abstellfläche für Fahrzeuge bezeichnet, nicht eine Parkbucht am Straßenrand, die Abstellplätze umfasst, die im allgemeinen Sprachgebrauch ebenfalls als Parkplatz bezeichnet werden. Wird im ersten Verfahrensschritt festgestellt, dass das Ego-Fahrzeug F_{ego} in einer Garage oder auf einem Parkplatz abgestellt ist, wird das Verfahren gestoppt.

Im zweiten Verfahrensschritt II überprüfen die Sensoren S3, S4, S5, S6 und S7 die unmittelbare Umgebung am Abstellort des Ego-Fahrzeugs F_{ego}. Das heißt, es kann zum Beispiel festgestellt werden, ob unmittelbar vor oder hinter dem Ego-Fahrzeug F_{ego} ein weiteres Fahrzeug F2 (Figur 3) abgestellt ist, der fließende Verkehr weniger als einen vorgegebenen Mindestabstand zum abgestellten Ego-Fahrzeug F_{ego} hat und/oder welche Seite des Ego-Fahrzeugs F_{ego} dem fließenden Verkehr zugewandt ist. Des Weiteren wird festgestellt, ob es Tag oder Nacht ist bzw. wie die aktuellen Licht- und/oder Wetterverhältnisse am Abstellort des Ego-Fahrzeugs F_{ego} sind. Die Sensoren S3, S4, S5, S6, S7 bilden die zweite Summe der Sensoren ΣS2 (Figur 1). Die Sensoren S3, S4, S5, S6, S7 können zum Beispiel eine Frontkamera, eine oder mehrere Top View Kameras oder Surround View Kameras, eine Heckkamera, ein Frontradar, ein Heckradar, Ultraschallsensoren, ein Navigationssystem und einen Lichtsensor umfassen.

Wird im zweiten Verfahrensschritt II erkannt, dass das Ego-Fahrzeug F_{ego} an einem Abstellort steht, der es erforderlich machen könnte, dass das Parklicht PL am Ego-Fahrzeug F_{ego} aktiviert wird, werden die von den Sensoren S1 bis S7 erfassten Daten in dem dritten Verfahrensschritt III in dem Rechner 20 zusammengeführt und gewichtet. Zusätzlich können aus dem Speicher 50 hinterlegte Daten bezüglich vorgegebener Grenzwerte für das Verfahren, wie beispielsweise Grenzwerte für den Lichtwert, für einen Abstand zu einem vor oder hinter dem Ego-Fahrzeug F_{ego} parkenden weiteren Fahrzeug oder für einen seitlichen Abstand des Ego-Fahrzeugs F_{ego} zum fließenden Verkehr herangezogen werden. Mit Hilfe der übermittelten Sensordaten und der herangezogenen Grenzwerte kann dann ein Gesamtbild E_{ges} (Figur 1) der Abstellsituation am Abstellort erstellt werden.

Im vierten Verfahrensschritt werden vom Rechner 20 notwenige Maßnahmen zur automatischen zumindest teilweisen Aktivierung oder Deaktivierung der Fahrzeugbeleuchtung des abgestellten Ego-Fahrzeugs F_{ego} ermittelt und entsprechende Schaltsignale für Aktoren A1, A2, A3, A4, A5 generiert.

Im fünften Verfahrensschritt V werden die Schaltsignale über die Sendeeinheit 40 der Steuerungseinrichtung 10 zu den Aktoren A1, A2, A3, A4, A5 übermittelt, um diese beispielsweise zu aktivieren, zu deaktivieren oder abzuändern.

In der Figur 2 sind durch Strichlinien mit Pfeilspitze ohne Bezugszeichen die entsprechenden Übertragungswege von den Sensoren S1 bis S7 zu der Steuerungseinrichtung 10 bzw. die Übertragungswege zu den Aktoren A1 bis A5 angedeutet. Dabei kann es sich zum Beispiel um Übertragung per Funk, Lichtleiter, Bus oder individuelle Kabel handeln. Mit den flächigen Pfeilen ohne Bezugszeichen ist angedeutet, wie die Daten innerhalb der Steuerungseinrichtung 10 verschoben werden können.

In der Figur 3 wird eine beispielhaften Situation für die Anwendung des Verfahrens gezeigt. Der Figur 3 ist nicht zu entnehmen, dass es am Abstellort des Ego-Fahrzeugs F_{ego} Nachtzeit ist, das heißt, es ist dunkel. Auf die Darstellung der Fahrtlichter der Fahrzeuge F1 und F3 wurde verzichtet.

In der Figur 3 ist das Ego-Fahrzeug F_{ego} innerorts auf der Fahrbahn am Rand einer befahrenen Straße abgestellt. Das Ego-Fahrzeug F_{ego} steht in Fahrtrichtung FR1. Neben dem Ego-Fahrzeug F_{ego} ist eine Straßenlaterne SL positioniert, die aus Energiegründen zum Beispiel zwischen 22 Uhr und 04 Uhr ausgeschaltet oder deren Licht in diesem Zeitraum gedimmt ist. In Fahrtrichtung FR1 unmittelbar vor dem Ego-Fahrzeug F_{ego} parkt ein Fahrzeug F2 in einem Abstand D2. Hinter dem Ego-Fahrzeug F_{ego} steht kein Fahrzeug. Auf der Straße fährt ein Fahrzeug F1 auf einer ersten Fahrbahn in die Fahrrichtung FR1 und ein Fahrzeug F3 auf einer zweiten Fahrbahn in die Fahrtrichtung FR2. Die erste und die zweite Fahrbahn sind durch eine Verkehrstrennlinie VT voneinander getrennt.

Im ersten Verfahrensschritt I wurde mittels Sensorik der Abstellort des Ego-Fahrzeugs F_{ego} ermittelt: innerorts, auf der Fahrbahn einer befahrenen Straße.

Im zweiten Verfahrensschritt II wurde mittels Sensorik die Abstellsituation am Abstellort erfasst: es ist Nacht, die Straßenlaterne SL ist aus oder ihr Licht ist gedimmt, vor dem Ego-Fahrzeug F_{ego} steht in einem Abstand von D2 ein Fahrzeug F2 ohne Parkbeleuchtung, kein Fahrzeug steht hinter dem Ego-Fahrzeug F_{ego}, die Straße ist befahrbar, ein mittlerer Abstand zu in die erste Fahrtrichtung F1 fahrenden Fahrzeugen F1 ist D1.

Im dritten Verfahrensschritt III werden alle Erkenntnisse aus dem ersten Verfahrensschritt I und dem zweiten Verfahrensschritt II zusammengeführt, und es wird überprüft, ob der Abstand D1 und der Abstand D2 unterhalb eines im Speicher 50 der Steuerungseinrichtung 10 vorgegebenen Grenzwertes für einen Mindestabstand liegen. In der gezeigten Situation entdeckt die Sensorik, dass der Abstand D2 zwischen der Front des Ego-Fahrzeugs F_{ego} und dem Heck des Fahrzeugs F2 kleiner ist als der vorgegebene Mindestabstand von zum Beispiel 5 m. Auch der seitliche Abstand D1 zwischen der dem Verkehr zugewandten Seite des Ego-Fahrzeugs F_{ego} und einer dem Ego-Fahrzeug F_{ego} zugewandten Seite des auf der Straße in Fahrtrichtung FR1 fahrenden Fahrzeugs F3 ist kleiner als der vorgegebene Grenzwert von beispielsweise 2 m.

Im vierten Verfahrensschritt IV werden Maßnahmen erkannt, die in der ermittelten Situation am Abstellort erforderlich sind, damit das Ego-Fahrzeug F_{ego} auf der befahrenen Straße sicher abgestellt ist und zum Beispiel durch die Straßenverkehrsordnung vorgeschriebene Sicherungsmaßnahmen erfüllt sind. In der beispielhaften Situation der Figur 3 wird als sinnvolle und notwendige Maßnahme erkannt, die Parklichter PL an der der Straße zugewandten Seite des Ego-Fahrzeugs F_{ego} zu aktivieren. Da vor dem Ego-Fahrzeug innerhalb des Mindestabstands ein weiteres Fahrzeug parkt, kann dabei optional auf die Aktivierung der vorderen Parklichter verzichtet werden.

Die Aktivierung der Parklichter PL am Ego-Fahrzeug F_{ego} erfolgt im fünften Verfahrensschritt V.

Die aktuelle Situation am Abstellort kann durch das Verfahren regelmäßig, beispielsweise in Abständen von 15, 20 oder 30 Minuten, überprüft werden, um Änderungen der Situation, die zum Beispiel das Deaktivieren des Parklichts PL erlauben, zeitnah zu erkennen. Dabei kann das Verfahren zum Beispiel erkennen, dass es in der aktuellen Situation ausreicht, wenn in kurzen Abständen nur die Helligkeit am Abstellort überprüft wird. In größeren Abständen kann überprüft werden, ob sich die Situation unmittelbar vor und/oder hinter dem Ego-Fahrzeug F_{ego} geändert hat. So kann des Parklicht PK beispielsweise nach Sonnenaufgang deaktiviert werden, oder wenn die Straßenlaterne SL den Abstellplatz hell erleuchtet. Parkt in der gezeigten Situation in Fahrtrichtung FR1 hinter dem Ego-Fahrzeug F_{ego} ein weiteres Fahrzeug , kann das hintere Parklicht des Ego-Fahrzeugs F_{ego} deaktiviert werden. Entfernt sich das vor dem Ego-Fahrzeug F_{ego} parkende Fahrzeug F2, kann das vordere Parklicht aktiviert werden.

### Bezugszeichenliste

- 10: Steuerungseinrichtung
- 20: Rechner
- 30: Empfangseinheit
- 40: Sendeeinheit
- 50: Speicher
- I: Verfahrensschritt
- II: Verfahrensschritt
- III: Verfahrensschritt
- IV: Verfahrensschritt
- V: Verfahrensschritt
- A1: Aktor
- A2: Aktor
- A3: Aktor
- A4: Aktor
- A5: Aktor
- D1: Abstand
- D2: Abstand
- E_{ges}: Gesamtbild
- E_{Abs}: Ergebnis Abstellort
- E_{Sit}: Ergebnis Situation
- E_{Akt}: Ergebnis Aktivierung
- F_{ego}: Ego-Fahrzeug
- F1: Fahrzeug
- F2: Fahrzeug
- F3: Fahrzeug
- FR1: Fahrtrichtung
- FR2: Fahrtrichtung
- L_{E}: Ergebnisleitung
- L_{S1}: Leitung
- L_{S2}: Leitung
- L_{Sig}: Signalleitung
- L_{E0}: Verfahrensende
- PL: Parklicht
- S1: Sensor
- S2: Sensor
- S3: Sensor
- S4: Sensor
- S5: Sensor
- S6: Sensor
- S7: Sensor
- SL: Straßenlaterne
- S_{Sig}: Schaltsignal
- VT: Verkehrstrennlinie
- ΣS1: Summe Sensoren
- ΣS2: Summe Sensoren

## Patentansprüche

1. Verfahren zur automatischen Aktivierung und Deaktivierung einer situationsabhängigen Beleuchtung eines abgestellten Ego-Fahrzeugs (F_{ego}), wobei
a. in einem ersten Verfahrensschritt (I) mittels Sensorik ein Abstellort des Ego-Fahrzeugs (F_{ego}) festgestellt und an eine Steuerungseinrichtung (10) weitergeleitet wird,
b. in einem zweiten Verfahrensschritt (II) mittels Sensorik eine aktuelle Situation am Abstellort festgestellt und an die Steuerungseinrichtung (10) weitergeleitet wird,
c. in einem dritten Verfahrensschritt (III) von einem Rechner (20) der Steuerungseinrichtung (10) der im ersten Verfahrensschritt (I) festgestellte Abstellort und die im zweiten Verfahrensschritt (II) festgestellte Situation am Abstellort zu einem aktuellen Gesamtbild (E_{ges}) zusammengefügt werden,
d. in einem vierten Verfahrensschritt (IV) aus dem aktuellen Gesamtbild (E_{ges}) mittels der Steuerungseinrichtung (10) notwenige Maßnahmen zur automatischen zumindest teilweisen Aktivierung oder Deaktivierung der Fahrzeugbeleuchtung des abgestellten Fahrzeugs ermittelt und
e. in einem fünften Verfahrensschritt (V) durch die Steuerungseinrichtung (10) veranlasst werden,
**dadurch gekennzeichnet, dass**
f. das Gesamtbild (E_{ges}) mittels der Sensorik kontinuierlich oder in Abständen überprüft oder überwacht wird.

2. Verfahren nach Anspruch 1, wobei im ersten Verfahrensschritt (I) durch die Steuerungseinheit festgestellt wird, ob das Ego-Fahrzeug (F_{ego})
• innerhalb einer geschlossenen Ortschaft am Straßenrand auf der Fahrbahn, in einem Parkhaus, auf einem Parkplatz, in einer Parkbucht, in einer Garage oder in einer Einfahrt oder
• außerhalb einer geschlossenen Ortschaft am Straßenrand oder in einer Parkbucht abgestellt ist.

3. Verfahren nach einem der vorhergehenden Ansprüche, wobei im zweiten Verfahrensschritt (II) am Abstellort Folgendes festgestellt wird:
• die aktuelle Ortszeit und/oder
• die aktuelle Helligkeit und/oder
• ob vor, neben oder hinter dem Fahrzeug ein weiteres Fahrzeug abgestellt ist und/oder
• dass eine Seite des Fahrzeugs einer befahrenen Straße zugewandt ist.

4. Verfahren nach einem der vorhergehenden Ansprüche, wobei im dritten Verfahrensschritt (III) aus den im ersten Verfahrensschritt (I) und im zweiten Verfahrensschritt (II) gewonnenen Erkenntnissen festgestellt wird, ob das Ego-Fahrzeug (F_{ego}) an einer Position abgestellt ist, an der andere Fahrzeuge (F1) in einem seitlichen Abstand (D1) vorbeifahren, der kleiner oder gleich einem vorgegebenen Mindestabstand ist, und/oder ob vor oder hinter dem Ego-Fahrzeug (F_{ego}) ein Fahrzeug (F1) parkt.

5. Verfahren nach Anspruch 4, wobei der vorgegebene Mindestabstand für den seitlichen Abstand (D1) kleiner 2 m, bevorzugt kleiner oder gleich 1,5 m ist.

6. Verfahren nach einem der vorhergehenden Ansprüche, wobei wenn das Gesamtbild (E_{ges}) ergibt, dass das Fahrzeug außerhalb einer geschlossenen Ortschaft an einer befahrenen Straße abgestellt und die Helligkeit unterhalb eines vorgegebenen Grenzwerts liegt, durch die Steuerungseinheit automatisch das Abblendlicht des Fahrzeug eingeschaltet wird.

7. Verfahren nach einem der vorhergehenden Ansprüche, wobei, wenn festgestellt wird, dass das Ego-Fahrzeug (F_{ego}) innerhalb einer geschlossenen Ortschaft zum Beispiel am Straßenrand an einer befahrenen Straße abgestellt ist und andere Fahrzeuge (F1) an dem abgestellten Ego-Fahrzeug (F_{ego}) mit einem Abstand (D1), der geringer als ein vorgegebener Mindestabstand ist, vorbeifahren und die Helligkeit unterhalb eines vorgegebenen Grenzwerts liegt, das vordere und/oder das hintere Parklicht (PL) auf der der Straße zugewandten Seite des Fahrzeugs (F_{ego}) durch die Steuerungseinrichtung (10) automatisch eingeschaltet werden.

8. Verfahren nach einem der vorhergehenden Ansprüche, wobei, wenn festgestellt wird, dass das Ego-Fahrzeug (F_{ego}) innerhalb einer geschlossenen Ortschaft zum Beispiel am Straßenrand an einer befahrenen Straße abgestellt ist und vor und/oder hinter dem Ego-Fahrzeug (F_{ego}) in einem Abstand (D2), der kleiner als ein vorgegebenen Mindestabstand (D2) ist, ein weiteres Fahrzeug (F1) abgestellt ist, das vordere Parklicht (PL) durch die Steuerungseinrichtung (10) automatisch ausgeschaltet wird, wenn das weitere Fahrzeug vor dem Ego-Fahrzeug (F_{ego}) steht, und/oder das hintere Parklicht (PL) durch die Steuerungseinrichtung (10) automatisch ausgeschaltet wird, wenn das weitere Fahrzeug (F1) hinter dem Ego-Fahrzeug (F_{ego}) steht.

9. Verfahren nach einem der vorhergehenden Ansprüche, wobei das Gesamtbild (E_{ges}) mittels der Sensorik kontinuierlich überwacht wird, wenn es sich bei dem Ego-Fahrzeug (F_{ego}) um ein Fahrzeug mit batteriebetriebenen Antrieb handelt und das Ego-Fahrzeug (F_{ego}) mit einer Ladestation für die Batterie verbunden ist.

10. Verfahren nach Anspruch 8, wobei die Zeitspannen zwischen zwei aufeinanderfolgenden Überprüfungen situationsbedingt variieren, wobei bevorzugt die Zeitspannen am Tag länger und in der Nacht kürzer sind und/oder die Zeitspannen bei einer Batterieladung unterhalb vorgegebener Grenzwerte automatisch verlängert werden.

11. Verfahren nach Anspruch 9, wobei von Sonnenaufgang bis Sonnenuntergang keine Überprüfungen stattfindet oder die Zeitspanne tagsüber oder nach dem Sonnenaufgang 4h oder 2h oder 1h ist, und die Zeitspanne nach dem Sonnenuntergang oder nachts 2h oder 1h oder 30min ist.

12. Verfahren nach einem der vorhergehenden Ansprüche, wobei die Sensorik wenigstens einen Sensor (S1, S2, S3, S4, S5, S6. S7) umfasst und der wenigstens eine Sensor (S1, S2, S3, S4, S5, S6, S7) ein GPS, ein Navigationssystem, ein Frontradar, ein Heckradar, ein Lichtsensor, ein Ultraschallsensor, Frontkamera, Heckkamera, Surround View Kamera, Top View Kamera, Lidar oder C2X, beispielsweise Schwarmdaten einer Fahrzeugflotte aus einer Cloud, ist.

13. Verfahren nach einem der vorhergehenden Ansprüche, wobei die Steuerungseinrichtung (10) zumindest den Rechner (20), eine Empfangseinheit (30), eine Sendeeinheit (40) und wenigstens einen Speicher (50) umfasst, wobei in dem wenigstens einen Speicher (50) vorgegebene Grenzwerte für zumindest eine Helligkeit am Abstellort des Ego-Fahrzeugs (F_{ego}), den Abstand zu einem vor oder hinter dem Ego-Fahrzeug (F_{ego}) Fahrzeug (F1) und die Batterieladung hinterlegt sind.

14. Verfahren nach Anspruch 2, wobei durch die Steuerungseinrichtung (1) unter Berücksichtigung regionaler oder landesspezifischer Bestimmungen bei dem innerhalb einer Ortschaft abgestellten Ego-Fahrzeug (F_{ego}) situationsbedingt das Parklicht (PL) des Ego-Fahrzeugs (F_{ego}) und bei dem außerhalb einer Ortschaft abgestellten Ego-Fahrzeug (F_{ego}) situationsbedingt das Abblendlicht aktiviert oder deaktiviert wird.

15. Verfahren nach einem der vorhergehenden Ansprüche, wobei ein vorderes bzw. hinteres Parklicht (PL) des Ego-Fahrzeugs (F_{ego}) unabhängig von dem hinteren bzw. vorderen Parklicht (PL) des Ego-Fahrzeugs (F_{ego}) aktiviert oder deaktiviert wird.
